(19) Europäisches Patentamt / European Patent Office / Office européen des brevets

(11) **EP 4 432 232 B1**

(12) **EUROPEAN PATENT SPECIFICATION**

(45) Date of publication and mention
of the grant of the patent:
**24.06.2026 Bulletin 2026/26**

(21) Application number: **21967506.3**

(22) Date of filing: **13.12.2021**

(51) International Patent Classification (IPC):
*G06V 20/59* (2022.01)  *G06V 10/62* (2022.01)
*G06V 20/40* (2022.01)  *G06V 40/16* (2022.01)
*G06V 40/18* (2022.01)  *G06V 40/20* (2022.01)
*G06F 18/00* (2023.01)  *G06T 7/70* (2017.01)
*G08B 21/06* (2006.01)  *G08B 23/00* (2006.01)

(52) Cooperative Patent Classification (CPC):
**G06T 7/70; G06V 10/62; G06V 20/41; G06V 20/44;
G06V 20/46; G06V 20/597; G06V 40/168;
G06V 40/193; G06V 40/197; G06V 40/20;
G08B 21/06;** G06F 2218/10; G06F 2218/12

(86) International application number:
**PCT/CN2021/137537**

(87) International publication number:
**WO 2023/108364 (22.06.2023 Gazette 2023/25)**

(54) **METHOD AND APPARATUS FOR DETECTING DRIVER STATE, AND STORAGE MEDIUM**

VERFAHREN UND VORRICHTUNG ZUR ERKENNUNG EINES FAHRERZUSTANDS UND SPEICHERMEDIUM

PROCÉDÉ ET APPAREIL POUR DÉTECTER UN ÉTAT DE CONDUCTEUR, ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2024 Bulletin 2024/38**

(73) Proprietor: **Yinwang Intelligent Technologies Co.,
Ltd.
Shenzhen, Guangdong 518129 (CN)**

(72) Inventors:
• **TIAN, Yong
Shenzhen, Guangdong 518129 (CN)**
• **XU, Wenkang
Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 108 701 214      CN-A- 108 875 642
CN-A- 109 670 421      CN-A- 110 826 521
CN-A- 111 079 476      CN-A- 112 052 770
CN-A- 112 949 370      CN-A- 113 536 967
US-A1- 2017 236 016    US-A1- 2019 122 044

## Description

## TECHNICAL FIELD

This application relates to the field of computer vision technologies, and in particular, to a method and an apparatus for detecting a status of a driver, and a storage medium.

## BACKGROUND

A human eye detection technology includes a technology of performing image detection on a plurality of image frames including human eyes, to estimate whether the eyes are currently in an eye-closed state or an eye-open state. With the popularization and development of video processing and video monitoring technologies, the human eye detection technology becomes an indispensable and important part in an eye image analysis process.

In a related technology, an in-vehicle scenario is used as an example. A camera is at a position relative to the face of a driver. A system obtains, via the camera, a plurality of image frames including human eyes, identifies an eye-open/closed state of the driver based on the plurality of image frames, and then may accurately monitor a fatigue status of the user in combination of a head pose.

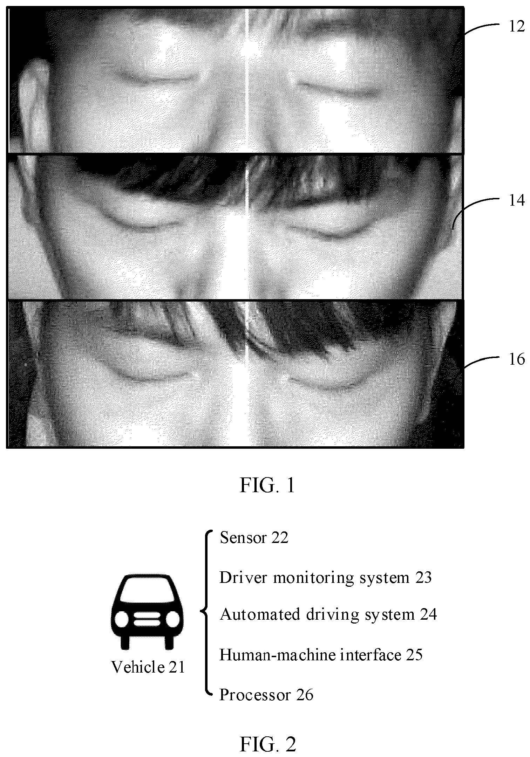

However, in the foregoing method, when the head of the driver faces downward, the system cannot accurately determine the eye-open/closed state of the driver based on an image obtained via the camera. In an example, three image frames obtained via the camera are shown in FIG. 1. An image frame 12 corresponds to a case of normally closing eyes, an image frame 14 corresponds to a case of lowering the head and opening the eyes, and an image frame 16 corresponds to a case of lowering the head and dozing. However, from a perspective of the camera, the eyes of the driver seem to be closed in these three cases, and there are obvious disadvantages in precision and robustness of identifying the eye-open/closed state directly based on the image. This greatly reduces accuracy of the fatigue status of the user subsequently determined based on the eye-open/closed state. CN112052770A describes a fatigue detection method and device in the field of vehicle driving technology. CN110826521A describes a method, a system, an electronic device, and a storage medium for identifying a driver's fatigue state. CN108875642A describes a method for detecting a fatigue state of a driver with multiple indicators.

## SUMMARY

In view of this, a method and an apparatus for detecting a status of a driver, and a storage medium are provided. This ensures eye-open/closed state identification effect with high precision and high robustness, and helps subsequently obtain a stable and accurate fatigue status of a user. The scope of the invention is set out in the appended claims.

According to a first aspect, an embodiment of this application provides a method for detecting a status of a driver. The method includes:

obtaining a first image frame and a second image frame, where both the first image frame and the second image frame are image frames including the face of a driver, and the first image frame is an image frame captured before the second image frame;

obtaining first detection information of the first image frame and second detection information of the second image frame, where both the first detection information and the second detection information indicate an eye status and a head pose of the driver; and

when the second detection information indicates that a first eye status corresponding to the second image frame is an eye-closed state, determining, based on the first detection information and the second detection information, a second eye status corresponding to the second image frame.

In this implementation, the first detection information of the first image frame and the second detection information of the second image frame (for example, a continuous eye status and a corresponding continuous head pose of the driver) are obtained. For different scenarios, such as a scenario of lowering the head and looking downward and a scenario of lowering the head and dozing, the second eye status corresponding to the second image frame may be determined based on the first detection information and the second detection information when it is determined that the first eye status corresponding to the second image frame is the eye-closed state. That is, an eye status corresponding to the second image frame is corrected to obtain a correct eye status. This resolves a problem in a related technology that when the driver lowers the head, a system cannot accurately determine an eye-open/closed state by directly using an image, ensures eye-open/closed state identification effect with high precision and high robustness, and helps subsequently obtain a stable and accurate fatigue status of a user.

The determining, based on the first detection information and the second detection information, a second eye status corresponding to the second image frame includes:

when the first detection information and the second detection information meet a first preset condition, determining that the second eye status corresponding to the second image frame is an eye-open state.

The first preset condition is that the second detection information indicates that a head pose corresponding to the second image frame jumps in a pitch angle direction, and the first detection information indicates that an eye status corresponding to the first image frame is the eye-open state.

In this implementation, when the second detection information indicates that the head pose corresponding to the second image frame jumps in the pitch angle direction, and the first detection information indicates that the eye status corresponding to the first image frame is the eye-open state, it is determined that the second eye status corresponding to the second image frame is the eye-open state. That is, misdetection of eye closing caused by glancing downward is accurately restored to the eye-open state based on a head pose sequence and an eye status sequence, and the eye-closed state in a scenario of dozing is not mistakenly modified, to further improve eye status identification effect.

In another possible implementation, the determining, based on the first detection information and the second detection information, a second eye status corresponding to the second image frame includes: when the first detection information and the second detection information meet a second preset condition, determining that the second eye status corresponding to the second image frame is the eye-closed state.

The second preset condition is that the second detection information indicates that the head pose corresponding to the second image frame jumps in the pitch angle direction, and the first detection information indicates that the eye status corresponding to the first image frame is the eye-closed state.

In this implementation, when the second detection information indicates that the head pose corresponding to the second image frame jumps in the pitch angle direction, and the first detection information indicates that the eye status corresponding to the first image frame is the eye-closed state, it is determined that the second eye status corresponding to the second image frame is the eye-closed state. That is, the scenario of lowering the head and dozing is accurately determined based on the head pose sequence and the eye status sequence, to further improve eye status identification effect.

In another possible implementation, the method further includes: when the second detection information indicates that the head pose corresponding to the second image frame does not jump in the pitch angle direction, determining that the second eye status corresponding to the second image frame is the eye-closed state.

In this implementation, when the second detection information indicates that the head pose corresponding to the second image frame does not jump in the pitch angle direction, it is determined that the second eye status corresponding to the second image frame is the eye-closed state. That is, the scenario of normally closing eyes is accurately determined by using the head pose sequence, to further improve eye status identification effect.

In another possible implementation, the method further includes: determining a fatigue status detection result based on the head pose and the second eye status that correspond to the second image frame.

In another possible implementation, the method further includes: outputting alarm information when the fatigue status detection result meets a preset alarm condition.

In this implementation, when the fatigue status detection result meets the preset alarm condition, the alarm information is output, so that when a dangerous driving behavior is monitored, the driver is reminded in time and a possible traffic accident of the driver is stopped.

According to a second aspect, an embodiment of this application provides an apparatus for detecting a status of a driver. The apparatus includes:

a first obtaining unit, configured to obtain a first image frame and a second image frame, where both the first image frame and the second image frame are image frames including the face of a driver, and the first image frame is an image frame captured before the second image frame;

a second obtaining unit, configured to obtain first detection information of the first image frame and second detection information of the second image frame, where both the first detection information and the second detection information indicate an eye status and a head pose of the driver; and

a determining unit, configured to: when the second detection information indicates that a first eye status corresponding to the second image frame is an eye-closed state, determine, based on the first detection information and the second detection information, a second eye status corresponding to the second image frame.

The determining unit is further configured to: when the first detection information and the second detection information meet a first preset condition, determine that the second eye status corresponding to the second image frame is an eye-open state.

The first preset condition is that the second detection information indicates that a head pose corresponding to the second image frame jumps in a pitch angle direction, and the first detection information indicates that an eye status corresponding to the first image frame is the eye-open state.

In another possible implementation, the determining unit is further configured to: when the first detection information and the second detection information meet a second preset condition, determine that the second eye status corresponding to the second image frame is the eye-closed state.

The second preset condition is that the second detection information indicates that the head pose corresponding to the second image frame jumps in the pitch angle direction, and the first detection information indicates that the eye status corresponding to the first image frame is the eye-closed state.

In another possible implementation, the determining unit is further configured to:

when the second detection information indicates that the head pose corresponding to the second image frame does not jump in the pitch angle direction, determine that the second eye status corresponding to the second image frame is the eye-closed state.

In another possible implementation, the apparatus further includes a detection module.

The detection module is configured to determine a fatigue status detection result based on the head pose and the second eye status that correspond to the second image frame.

In another possible implementation, the apparatus further includes an alarm module.

The alarm module is configured to output alarm information when the fatigue status detection result meets a preset alarm condition.

According to a third aspect, an embodiment of this application provides an apparatus for detecting a status of a driver. The apparatus includes:

a processor; and
a memory, configured to store processor-executable instructions.

The processor is configured to implement the method provided in any one of the first aspect or the possible implementations of the first aspect when executing the instructions.

According to a fourth aspect, an embodiment of this application provides a non-volatile computer-readable storage medium. The non-volatile computer-readable storage medium stores computer program instructions. When the computer program instructions are executed by a processor, the method provided in any one of the first aspect or the possible implementations of the first aspect is implemented.

According to a fifth aspect, an embodiment of this application provides a computer program product. The computer program product includes computer-readable code or a non-volatile computer-readable storage medium carrying the computer-readable code. When the computer-readable code is run in an electronic device, a processor in the electronic device performs the method provided in any one of the first aspect or the possible implementations of the first aspect.

According to a sixth aspect, an embodiment of this application provides a vehicle. The vehicle includes the apparatus provided in any one of the second aspect or the possible implementations of the second aspect.

**BRIEF DESCRIPTION OF DRAWINGS**

The accompanying drawings included in this specification and constituting a part of this specification and this specification jointly show example embodiments, features, and aspects of this application, and are intended to explain the principles of this application.

FIG. 1 is a schematic diagram of three image frames obtained via a camera;
FIG. 2 is a schematic diagram of an architecture of a DMS according to an example embodiment of this application;
FIG. 3 is a schematic diagram of an architecture of an apparatus for detecting a status of a driver according to an example embodiment of this application;
FIG. 4 is a schematic flowchart of a method for detecting a status of a driver according to an example embodiment of this application;
FIG. 5 is a schematic flowchart of a method for detecting a status of a driver according to another example embodiment of this application;
FIG. 6 is a schematic diagram of a principle of an eye status detection manner according to an example embodiment of this application;
FIG. 7 is a schematic diagram of a principle of a head pose detection manner according to an example embodiment of this application;
FIG. 8 is a schematic diagram of a status sequence correction process according to an example embodiment of this application;
FIG. 9 is a schematic diagram of a status sequence correction process according to another example embodiment of this application;
FIG. 10 is a schematic diagram of a status sequence correction process according to another example embodiment of this application;
FIG. 11 is a schematic diagram of a principle of three scenarios and a correction process in a method for detecting a status of a driver according to an example embodiment of this application; and
FIG. 12 is a block diagram of an apparatus for detecting a status of a driver according to an example embodiment of this application.

**DESCRIPTION OF EMBODIMENTS**

The following describes various example embodiments, features, and aspects of this application in detail with reference to the accompanying drawings. Identical reference signs in the accompanying drawings represent elements that have same or similar functions. Although various aspects of embodiments are shown in the accompanying drawings, unless otherwise particularly specified, the accompanying drawings do not need to be drawn to scale.

The specific term "example" herein means "used as an example, embodiment or illustration". Any embodiment described as an "example" herein is not necessarily explained as being superior or better than other embodiments.

In addition, to better describe this application, numerous specific details are given in the following specific implementations. A person skilled in the art should understand that this application can also be implemented without some specific details. In some examples, methods, means, elements, and circuits that are well-known to a person skilled in the art are not described in detail, so that the subject of this application is highlighted.

A fatigue driving warning system accurately identifies an eye status, a yawn action, a head pose, and an abnormal behavior of a driver through a driver monitoring system (driver monitoring system, DMS) in a cockpit, accurately determines a fatigue status of the driver by using these pieces of information, and provides alarm information, to ensure driving safety of a user. An eye status identification technology is an important module of the fatigue driving warning system. A fatigue degree of the driver may be analyzed based on frequencies of continuous eye closing and blinking, and whether vision of the driver is distracted may be analyzed based on continuous eye closing duration, so that the eye status of the user is accurately identified, to implement accurate fatigue warning. Eye status identification with high precision and high robustness helps obtain a stable and accurate fatigue status of the user. In particular, in an in-vehicle scenario, not only the high precision is required, but an algorithm also needs to adapt to various ambient light and different mounting position scenarios of a camera. The camera is a camera used to monitor the driver in the DMS. When the camera is mounted on a position of a pillar A or a rear-view mirror of a vehicle, and the head of the driver faces downward, an eye open/-closed state cannot be accurately determined based on an image obtained from the camera. In a related technology, there are obvious disadvantages in precision and robustness of analyzing the eye-open/closed state only based on the image. This greatly reduces accuracy of the fatigue status of the user subsequently determined based on the eye-open/closed state.

Embodiments of this application provide a method and an apparatus for detecting a status of a driver, and a storage medium. When determining that a first eye status corresponding to a second image frame is an eye-closed state, a system determines, based on first detection information of a first image frame (that is, an image frame captured before the second image frame) and second detection information of the second image frame, a second eye status corresponding to the second image frame, to correct an eye status corresponding to the second image frame to obtain a correct eye status. This resolves a problem in a related technology that when the driver lowers the head, the system cannot accurately determine an eye-open/closed state by directly using an image, ensures eye-open/closed state identification effect with high precision and high robustness, and helps subsequently obtain a stable and accurate fatigue status of a user. It should be noted that for definitions of the first image frame and the second image frame, refer to related descriptions in the following embodiments.

First, an application scenario in this application is described.

A product in embodiments of this application is a DMS that is classified into a front-mounted DMS and a rear-mounted DMS. The pre-assembled DMS is generally designed and developed by an original equipment manufacturer OEM, and only adapts to a current vehicle model and a current mounting position. The post-assembled DMS is mainly designed and developed by a related software and hardware supplier, and may be conveniently mounted on various vehicle models and various positions. This product is mainly used in a cockpit environment to monitor the status of the driver. This product reminds the driver in time in a dangerous state for safety of the driver. In addition, the country stipulates that the DMS needs to be mounted in some scenarios, to monitor a dangerous driving behavior in time and stop, in time, a traffic accident that may be caused by the driver.

FIG. 2 is a schematic diagram of an architecture of a DMS according to an example embodiment of this application. As shown in FIG. 2, the DMS may include a vehicle 21. The vehicle 21 may be a vehicle having a wireless communication function. The wireless communication function may be set on a vehicle-mounted terminal, a vehicle-mounted module, a vehicle-mounted unit, a chip (system), or another component or assembly of the vehicle 21. The vehicle 21 in embodiments of this application is configured to monitor a status of a driver, and send reminder information when it is determined that the driver is in a fatigued and distracted state. The reminder information indicates the driver to pay attention to safe driving.

At least one sensor 22, such as a vehicle-mounted radar (such as a millimeter-wave radar, a lidar, or an ultrasonic radar), a rainfall sensor, a camera, a vehicle posture sensor (such as a gyroscope), an inertia measurement unit (inertial measurement unit, IMU), or a global navigation satellite system (global navigation satellite system, GNSS), may be disposed on the vehicle 21. Another sensor may be further disposed on the vehicle 21.

The camera is configured to capture a static image or a video. Generally, the camera may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal. For example, the camera is a DMS infrared camera. An image frame of the driver may be captured via the at least one camera disposed on the vehicle 21. The image frame of the driver is an image frame including the face of the driver.

Data such as point cloud data of a road surface and a vertical acceleration of the vehicle 21 (that is, acceleration data of the vehicle 21 in a direction perpendicular to the road surface) may be further collected via the at least one vehicle-mounted radar disposed on the vehicle 21.

The data such as the point cloud data of the road surface and the vertical acceleration of the vehicle 21 (that is, the acceleration data of the vehicle 21 in the direction perpendicular to the road surface) may be further collected via the at least one sensor 22 disposed on the vehicle 21.

A driver monitoring system 23 may be further disposed on the vehicle 21, and the driver monitoring system 23 is configured to monitor the status of the driver. An automated driving system 24 may be further disposed on the vehicle 21. The driver monitoring system 23 assists the automated driving system 24. When the driver monitoring system 23 determines that the driver is in the fatigued and distracted state, the automated driving system 24 may take over the vehicle. The automated driving system 24 may be configured to generate, based on data collected by the sensor, an automated driving policy used to cope with a road surface condition, and implement automated driving of the vehicle 21 according to the generated policy.

A human-machine interface (human-machine interface, HMI) 25 may be further disposed on the vehicle 21. The human-machine interface 25 may be configured to broadcast, in a visual icon or voice broadcast manner, a current road surface condition and the policy used by the automated driving system 24 for the vehicle 21, to remind a related driver and passenger.

A processor 26 may be further disposed on the vehicle 21. For example, the processor 26 is a high-performance computing processor. The processor 26 is configured to obtain a first image frame and a second image frame via the camera, where both the first image frame and the second image frame are image frames including the face of the driver, and the first image frame is an image frame captured before the second image frame. The processor 26 is configured to: obtain first detection information of the first image frame and second detection information of the second image frame via the driver monitoring system 23, where both the first detection information and the second detection information indicate an eye status and a head pose of the driver; and when the second detection information indicates that a first eye status corresponding to the second image frame is an eye-closed state, determine, based on the first detection information and the second detection information, a second eye status corresponding to the second image frame.

In a possible implementation, the DMS in embodiments of this application may further include a server. The server may be located on the vehicle 21 as a vehicle-mounted computing unit, or may be located on a cloud. The server may be a physical device, or may be a virtual device such as a virtual machine or a container.

The server has the wireless communication function. The wireless communication function may be set on a chip (system) or another component or assembly of the server. The server and the vehicle 21 may communicate with each other in a wireless connection manner. For example, the server and the vehicle 21 may communicate with each other by using a mobile communication technology such as 2G/3G/4G/5G and in a wireless communication manner such as Wi-Fi, Bluetooth, frequency modulation (frequency modulation, FM), radio modem, or satellite communication. For example, in a test, the server may be carried on the vehicle 21 and communicate with the vehicle 21 in the wireless connection manner. The server may gather, for calculation and through communication between the server and the vehicle 21, data collected by a sensor on one or more vehicles 21 or a sensor disposed on a road or another place, and transmit a calculation result back to the corresponding vehicle 21.

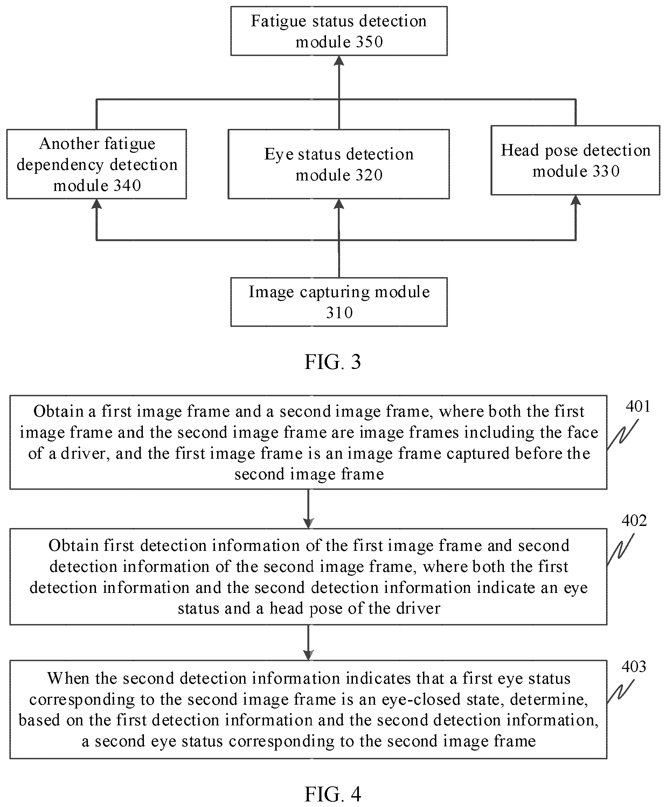

FIG. 3 is a schematic diagram of an architecture of an apparatus for detecting a status of a driver according to an example embodiment of this application. The apparatus for detecting a status of a driver may be implemented as an entirety or a part of the DMS in FIG. 2 by using a dedicated hardware circuit or a combination of software and hardware. The apparatus for detecting a status of a driver includes an image capturing module 310, an eye status detection module 320, and a head pose detection module 330.

The image capturing module 310 is configured to capture an image frame of a driver. The eye status detection module 320 is configured to detect an eye status of the driver in the image frame of the driver. The head pose detection module 330 is configured to detect a head pose of the driver in the image frame of the driver.

The apparatus for detecting a status of a driver may further include another fatigue dependency detection module 340 and a fatigue status detection module 350. The another fatigue dependency detection module 340 is configured to detect another specified status of the driver in the image frame of the driver. The another specified status is a biometric feature status related to a fatigue status of the driver. For example, the another specified status is a yawn status.

The eye status detection module 320 is further configured to input a detected eye status of the driver to the fatigue status detection module 350. The head pose detection module 330 is further configured to input a detected head pose of the driver to the fatigue status detection module 350. The another fatigue dependency detection module 340 is further configured to input another detected specified status of the driver to the fatigue status detection module 350. Accordingly, the fatigue status detection module 350 is configured to comprehensively determine the fatigue status of the driver based on an input status (for example, the eye status, the head pose, and the another specified status).

The following uses an architecture of the DMS (referred to as a system for short below) provided in FIG. 2 or FIG. 3 as an example to describe a procedure of a method for detecting a status of a driver provided in an embodiment of this application.

FIG. 4 is a schematic flowchart of a method for detecting a status of a driver according to an example embodiment of this application. As shown in FIG. 4, a procedure of the method for detecting a status of a driver includes the following steps.

Step 401: Obtain a first image frame and a second image frame, where both the first image frame and the second image frame are image frames including the face of a driver, and the first image frame is an image frame captured before the second image frame.

Optionally, a system captures an image frame sequence via a camera. The image frame sequence includes at least two image frames, that is, at least one first image frame and one second image frame.

Both the first image frame and the second image frame are the image frames including the face of the driver, that is, both the first image frame and the second image frame include features of the entire face of the driver.

The first image frame is the image frame captured before the second image frame. Optionally, the first image frame is at least two image frames captured before the second image frame.

Optionally, the at least one first image frame and the second image frame are a plurality of continuous image frames.

Step 402: Obtain first detection information of the first image frame and second detection information of the second image frame, where both the first detection information and the second detection information indicate an eye status and a head pose of the driver.

Optionally, the system performs eye status detection and head pose detection on the first image frame to obtain the first detection information. The first detection information indicates an eye status and a head pose that are of the driver and that correspond to the first image frame. For example, the first detection information includes first eye detection information and first head detection information. The first eye detection information indicates the eye status that is of the driver and that corresponds to the first image frame. The first head detection information indicates the head pose that is of the driver and that corresponds to the first image frame. The eye status includes an eye-closed state or an eye-open state.

Optionally, the system performs eye status detection and head pose detection on the second image frame to obtain the second detection information. The second detection information indicates an eye status and a head pose that are of the driver and that correspond to the second image frame. For example, the second detection information includes second eye detection information and second head detection information. The second eye detection information indicates the eye status that is of the driver and that corresponds to the second image frame. The second head detection information indicates a head pose that is of the driver and that corresponds to the second image frame.

It should be noted that eye status detection and head pose detection may be performed in parallel, or may be performed in sequence. This is not limited in this embodiment of this application. For details about eye status detection and head pose detection, refer to related descriptions in the following embodiments. Details are not described herein.

Step 403: When the second detection information indicates that a first eye status corresponding to the second image frame is the eye-closed state, determine, based on the first detection information and the second detection information, a second eye status corresponding to the second image frame.

Optionally, the system determines whether the second detection information indicates that the first eye status corresponding to the second image frame is the eye-closed state. If the first eye status corresponding to the second image frame is the eye-closed state, the system determines, based on the first detection information and the second detection information, the second eye status corresponding to the second image frame. If the first eye status corresponding to the second image frame is the eye-open state, the process ends.

Optionally, when the first detection information and the second detection information meet a first preset condition, the system determines that the second eye status corresponding to the second image frame is the eye-open state. The first preset condition is that the second detection information indicates that the head pose corresponding to the second image frame jumps in a pitch angle direction, and the first detection information indicates that the eye status corresponding to the first image frame is the eye-open state.

For example, the first image frame includes a plurality of first image frames, and a meaning of "the first detection information indicates that the eye status corresponding to the first image frame is the eye-open state" includes: The first detection information indicates that a ratio of a quantity of first image frames in which the eye status is the eye-open state to a total quantity of first image frames is greater than a first preset threshold.

The first preset threshold is set by default, or is set in a customized manner. For example, the first preset threshold is 0.9. This is not limited in this embodiment of this application.

Optionally, when the first detection information and the second detection information meet a second preset condition, the system determines that the second eye status corresponding to the second image frame is the eye-closed state. The second preset condition is that the second detection information indicates that the head pose corresponding to the second image frame jumps in the pitch angle direction, and the first detection information indicates that the eye status corresponding to the first image frame is the eye-closed state.

For example, the first image frame includes a plurality of first image frames, and a meaning of "the first detection information indicates that the eye status corresponding to the first image frame is the eye-closed state" includes: The first detection information indicates that a ratio of a quantity of first image frames in which the eye status is the eye-closed state to the total quantity of first image frames is greater than a second preset threshold.

The second preset threshold is set by default, or is set in the customized manner. For example, the second preset threshold is 0.95. This is not limited in this embodiment of this application.

Optionally, when the second detection information indicates that the head pose corresponding to the second image frame does not jump in the pitch angle direction, the system determines that the second eye status corresponding to the second image frame is the eye-closed state.

Optionally, the system determines a fatigue status detection result based on the head pose and the second eye status that correspond to the second image frame. When the fatigue status detection result meets a preset alarm condition, alarm information is output.

Optionally, the system obtains a preset fatigue detection model, invokes the fatigue detection model based on the head pose and the second eye status that correspond to the second image frame, and outputs to obtain the fatigue status detection result. The fatigue detection model indicates a correlation between a head pose and a fatigue status and a correlation between an eye status and a fatigue status, and the fatigue detection model is a model that is pre-trained based on a sample image frame. For example, the fatigue detection model is a model obtained through fusion based on the eye status and the head pose. Alternatively, the fatigue detection model is a model obtained through fusion based on the eye status, the head pose, and a yawn status. Alternatively, the fatigue detection model is a model obtained through fusion based on the eye status, the head pose, the yawn status, and other information. This is not limited in this embodiment of this application.

In a possible implementation, the fatigue status detection result includes one of a first detection result and a second detection result. The first detection result indicates that the driver is in a fatigued state, and the second detection result indicates that the driver is in a non-fatigue state.

In this implementation, outputting the alarm information when the fatigue status detection result meets the preset alarm condition includes: outputting the alarm information when the fatigue status detection result is the first detection result.

In another possible implementation, the fatigue status detection result includes a fatigue status level, and the fatigue status level is related to predicted fatigue strength of the driver. For example, there is a positive correlation between the fatigue status level and the predicted fatigue strength of the driver, that is, a higher fatigue status level indicates larger predicted fatigue strength of the driver.

In this implementation, outputting the alarm information when the fatigue status detection result meets the preset alarm condition includes: outputting the alarm information when the fatigue status level is greater than a preset level threshold.

The preset level threshold is set by default, or is set in the customized manner. This is not limited in this embodiment of this application.

Optionally, the system outputs the alarm information based on a preset prompt form. The preset prompt form includes at least one of a voice form, a text form, an image form, and an animation form. An output manner and output content of the alarm information is not limited in this embodiment of this application.

In conclusion, in this embodiment of this application, the first detection information of the first image frame and the second detection information of the second image frame (for example, a continuous eye status and a corresponding continuous head pose of the driver) are obtained. For different scenarios, such as a scenario of lowering the head and looking downward and a scenario of lowering the head and dozing, the second eye status corresponding to the second image frame may be determined based on the first detection information and the second detection information when it is determined that the first eye status corresponding to the second image frame is the eye-closed state. That is, the eye status corresponding to the second image frame is corrected to obtain a correct eye status. This resolves a problem in a related technology that when the driver lowers the head, the system cannot accurately determine the eye-open/closed state by directly using an image, ensures eye-open/closed state identification effect with high precision and high robustness, and helps subsequently obtain a stable and accurate fatigue status of the user.

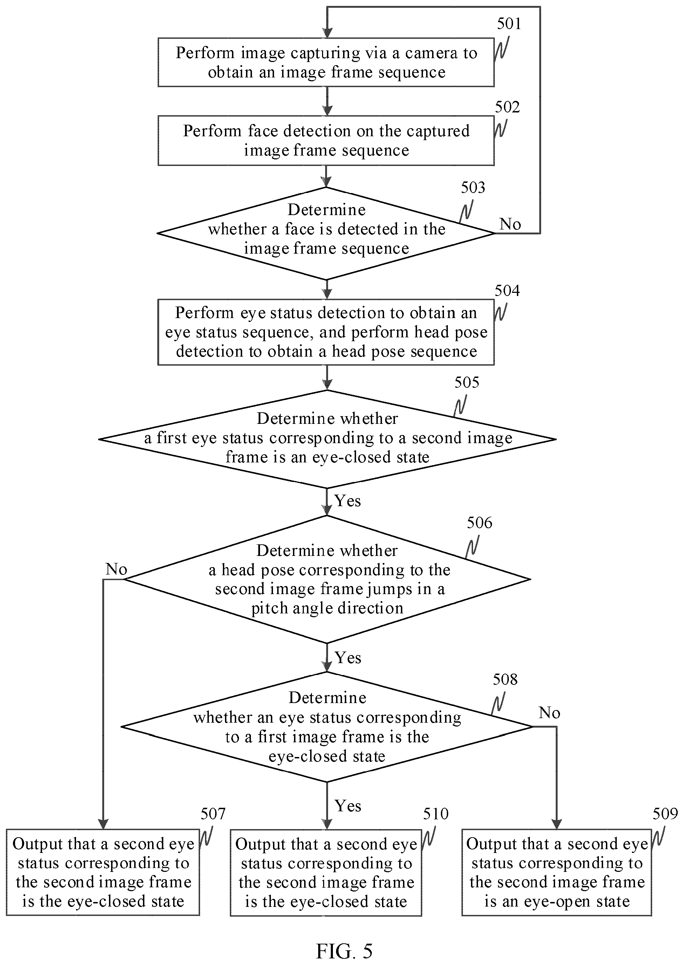

FIG. 5 is a schematic flowchart of a method for detecting a status of a driver according to another example embodiment of this application. As shown in FIG. 5, a procedure of the method for detecting a status of a driver includes the following steps.

Step 501: Perform image capturing via a camera to obtain an image frame sequence.

Optionally, a system performs image capturing via the camera deployed in at least one position in a vehicle, to obtain the image frame sequence. The camera may be an infrared camera.

Optionally, the at least one position includes any one or more of the following positions: a position above or near a steering column and a dashboard, a position above or near a center console, a position of a pillar A or near the pillar A, and a position of a rear-view mirror or near the rear-view mirror. When the camera is placed on a position that is on the steering column and that is optimal to identify an eye status, a case in which the eye status cannot be correctly identified in a head-down event does not easily occur. However, in this position, a steering wheel easily blocks a face, and consequently, the eye status cannot be identified. When the camera is placed on the position of the pillar A or the rear-view mirror, the steering wheel does not block the face during image capturing, but a scenario in which the eye status cannot be correctly identified in the head-down event definitely occurs.

Optionally, the performing image capturing via a camera to obtain an image frame sequence includes: performing image capturing via the camera when the vehicle is in a driving state, to obtain the image frame sequence; and/or performing image capturing via the camera when a running speed of the vehicle exceeds a preset vehicle speed, to obtain the image frame sequence; and/or performing image capturing via the camera after it is detected that the vehicle is ignited, to obtain the image frame sequence; and/or performing image capturing via the camera when a start instruction of the vehicle is detected, to obtain the image frame sequence, and/or performing image capturing via the camera when a control instruction for the vehicle or a component or a system in the vehicle is detected, to obtain the image frame sequence. It should be noted that a trigger condition and a capturing manner of image capturing are not limited in this embodiment of this application.

Step 502: Perform face detection on the captured image frame sequence.

Face detection is a basis of other face applications. An eye status detection algorithm and a head pose algorithm based on the face are affected by a front-end face detection algorithm. When jitter occurs in positioning of the face detection algorithm or positioning is inaccurate to cause misidentification or missed detection, the eye status is misidentified or large jitter occurs in the head pose. Consequently, the system mistakenly determines a normal state as the head-down event. Only when whether there is the face and accurate position information of the face are obtained, the system can obtain a stable and accurate eye status result.

Optionally, the system performs face detection on the captured image frame sequence by using a preset face detection algorithm.

In a possible implementation, the preset face detection algorithm is a dedicated face detection algorithm, for example, a multi-task face detection algorithm. The multi-task face detection algorithm is used to detect the face and output face key point information, so that a subsequent system may correct the face by using the face key point information, provide a better input for a back-end eye status detection algorithm, and improve accuracy of a single-frame eye status identification algorithm. The dedicated face detection algorithm has high accuracy. However, it takes a long time to deploy the algorithm on an in-vehicle side, and the algorithm is not suitable for being deployed on the in-vehicle side.

In another possible implementation, the preset face detection algorithm is a lightweight face detection algorithm, and the algorithm is suitable for being deployed on the in-vehicle side.

In another possible implementation, the preset face detection algorithm is a general target detection algorithm, for example, a single-phase target detection algorithm. The algorithm has a high speed and high accuracy on the in-vehicle side, and is suitable for being deployed on an in-vehicle infotainment system as the face detection algorithm. It should be noted that the preset face detection algorithm is not limited in this embodiment of this application.

Step 503: Determine whether the face is detected in the image frame sequence.

If the system does not detect the face in the image frame sequence, step 501 continues to be performed. If the system detects the face in the image frame sequence, step 504 is performed.

Step 504: If the face is detected in the image frame sequence, perform eye status detection to obtain an eye status sequence, and perform head pose detection to obtain a head pose sequence.

Optionally, for each image frame in the image frame sequence, the system performs eye status detection and head pose detection to obtain eye status detection data and head pose detection data that correspond to the image frame, to obtain an eye status sequence and a head pose sequence corresponding to the image frame sequence. That is, the eye status sequence includes eye status detection data corresponding to each of a plurality of image frames in the image frame sequence, and the head pose sequence includes head pose detection data corresponding to each of a plurality of image frames in the image frame sequence.

For single-frame eye status detection, in a possible implementation, the system may perform eye status detection by using the target detection algorithm. Eye status identification performed based on the target detection algorithm has high robustness, and there is a low possibility that eye status identification is interfered, so that a scenario of wearing a mask, a scenario in which a face is blocked by a hand, and a scenario of making up are easily supported. Eye status identification is affected only in a scenario in which an eye part is blocked or interfered. However, based on the target detection algorithm, a scenario of slanted eyes and a scenario of squinting caused by fatigue cannot be distinguished, and consequently, a case in which the two states are mutually misidentified exists. The eye status identification algorithm is applicable to a scenario in which an amount of face data is small, and face samples of a driving environment in all scenarios cannot be all covered.

In another possible implementation, because a face size and an eye size change slightly, the system may perform eye status detection by using the general target detection algorithm after pruning, and predict the eye status by using only some network branches. This can greatly improve a detection speed while ensuring accuracy, and have a larger advantage on the in-vehicle side.

In another possible implementation, the system may perform eye status detection by using a preset classification algorithm. The eye status detection performed based on the preset classification algorithm may be classified into two cases. In one case, the eye status is determined based on the image frame including the face. Because a ratio of an area occupied by eyes to an area of the face is very small, misidentification is easily caused by interference from another part of the face, for example, wearing a mask or making up both may cause misidentification. In addition, in this method, an invalid state caused by whether the eyes are blocked cannot be distinguished. In another case, an eye detection model is added, and then the image frame including the eyes is input to the eye detection model to output to obtain the eye status. The eye detection model is a neural network model that is pre-trained and that is used to identify the eye status in the image frame. This method is not interfered by another part of the eye, has higher robustness, and has higher accuracy than the foregoing case. This method cannot distinguish the scenario of slanted eyes and the scenario of squinting caused by fatigue either. In addition, in this method, the eye detection model is added, so that resource consumption is increased, and performance on the in-vehicle side is reduced.

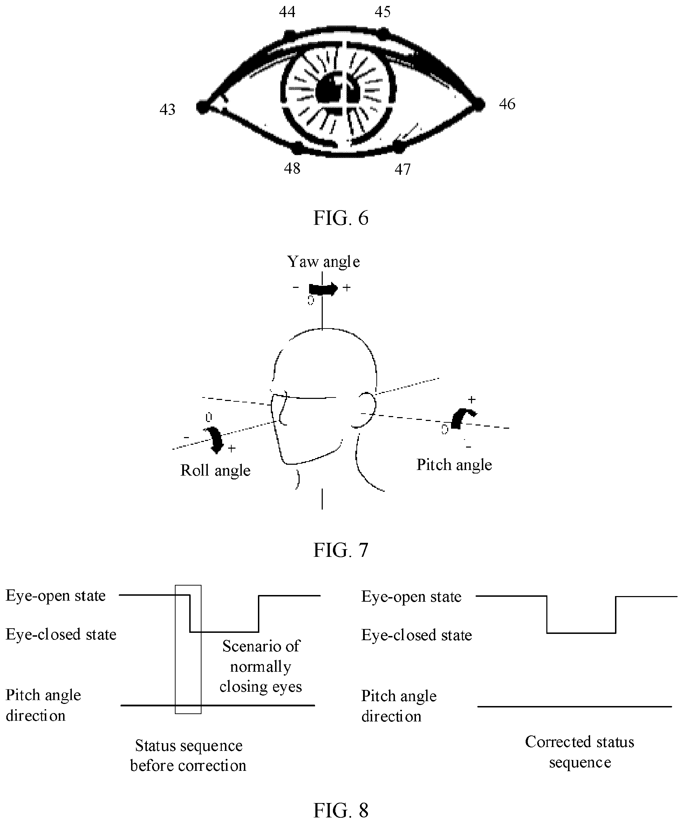

In another possible implementation, the system may perform eye status detection by using a key point algorithm. Optionally, as shown in FIG. 6, the system detects six key point positions "$p_{43}$, $p_{44}$, $p_{45}$, $p_{46}$, $p_{47}$, and $p_{48}$" of upper eyelids, lower eyelids, and eye corners of the eyes, and then calculates a normalized distance EAR through the following formula:

$$\mathrm{EAR} = \frac{\|p_{48} - p_{44}\| + \|p_{47} - p_{45}\|}{2\|p_{46} - p_{43}\|}$$

The normalized distance is used as an eye opening indicator. When the eye opening indicator is less than a preset opening threshold, it is determined that the eyes are in an eye-closed state; and when the eye opening indicator is not less than the preset opening threshold, it is determined that the eyes are in an eye-open state. The preset opening threshold is set by default or is set in a customized manner. For example, the preset opening threshold is 20% of a normal eye opening value. This is not limited in this embodiment of this application. Based on the key point algorithm and head pose calibration, the scenario of slanted eyes and the scenario of squinting caused by fatigue may be distinguished, so that accuracy of eye status identification in the two scenarios is significantly improved. The eye-open/closed state based on the eye opening indicator is very suitable to be used as a basis of subsequent determining of a fatigue status of a driver. However, this method has a high requirement on stability of the key point algorithm, and requires that large jitter does not occur in a key point position, that is, a corresponding eye opening needs to be stable. To avoid occurrence of large jitter in the eye opening, a filtering method may be added, that is, the system performs filtering processing on an output eye opening indicator, to obtain a more stable eye opening indicator.

For single-frame head pose detection, the system maps a two-dimensional image frame to a three-dimensional image frame to obtain the head pose detection data. The head pose detection data indicates an orientation of a face pose of the driver. Optionally, the head pose detection data is represented by using three degrees of freedom (degrees of freedom, dof): a pitch angle (pitch), a roll angle (roll), and a yaw angle (yaw). As shown in FIG. 7, the head pose detection data includes a pitch angle between the head of the driver and a horizontal axis of a device coordinate system, a yaw angle between the head and a longitudinal axis of the device coordinate system, and a roll angle between the head and a vertical axis of the device coordinate system.

For an entire eye status identification system, accuracy and stability of head pose detection are crucial. In addition, due to a mounting position of the camera and a head-down reason, the head pose detection algorithm needs to support a large-angle head pose.

In a possible implementation, the system performs head pose detection based on face key points. This method may perform training based on a large amount of existing key point data, and may obtain key point information of each part of the face. Because disturbance of the points has slight impact on the angle, the head pose is more stable.

In another possible implementation, the system performs head pose detection based on a regression algorithm. This method may directly regress an Euler angle. This is simple and convenient. A model design is simple, and there is no need to perform post-processing or secondary algorithm optimization for solving. A difficulty of a regression-based head pose detection algorithm lies in head pose data collection. A head pose data collection method includes a data generation method and a direct collection method. The direct collection method includes: A head pose tag of a real camera coordinate system may be directly collected via an optical tracker and a camera array, and 360° head pose data may be covered. However, devices are expensive, deployment is complex, a collection periodicity is long, and manpower investment is large. The data generation method includes: performing three-dimensional morphable model (3D morphable model, 3DMM) fitting on key point data in the two-dimensional image frame, and then performing head pose enhancement to obtain the head pose tap at a large angle. The method may support head pose data at $\pm 90°$. This method depends only on 2D key point marking, and feasibility and costs are both appropriate.

In another possible implementation, the system performs head pose detection based on the face key points and the regression algorithm. Optionally, the system inputs the image frame into a head pose detection model, and outputs to obtain the head pose data. The head pose detection model is a multi-task neural network model based on a method of the face key points and regression, that is, tasks such as Euler angle regression and the face key points are performed in one network model. Through a shared skeleton network, a plurality of head networks are used to perform different tasks, and a prediction error of the Euler angle can be reduced to some extent by using this method.

It should be noted that manners of the eye status detection algorithm and the head pose detection algorithm are not limited in this embodiment of this application.

Step 505: Determine whether the first eye status corresponding to the second image frame is the eye-closed state.

Eye status detection and head pose detection are performed on each image frame in the image frame sequence, the system obtains an eye status queue and a head pose queue that correspond to the image frame sequence, and the system determines whether the first eye status in a latest frame, that is, the second image frame, in the image frame sequence is the eye-closed state.

If the first eye status corresponding to the second image frame is the eye-open state, the process ends. If the first eye status corresponding to the second image frame is the eye-closed state, the system continues to perform step 506. The following three scenarios are distinguished by checking the eye status queue and the head pose queue that correspond to the image frame sequence: a scenario of normally closing eyes, a scenario of lowing the head, opening the eyes, and looking downward, and a scenario of lowering the head and dozing.

Step 506: If the first eye status corresponding to the second image frame is the eye-closed state, determine whether a head pose corresponding to the second image frame jumps in a pitch angle direction.

If the first eye status corresponding to the second image frame is the eye-closed state, the system determines whether the head pose corresponding to the second image frame jumps in the pitch angle direction. If the head pose corresponding to the second image frame does not jump in the pitch angle direction, step 507 is performed. If the head pose corresponding to the second image frame jumps in the pitch angle direction, step 508 is performed.

Step 507: If the head pose corresponding to the second image frame does not jump in the pitch angle direction, output that a second eye status corresponding to the second image frame is the eye-closed state.

If the head pose corresponding to the second image frame does not jump in the pitch angle direction, it is determined that the scenario is the scenario of normally closing eyes, and it is output that the second eye status corresponding to the second image frame is the eye-closed state.

In a schematic example, as shown in FIG. 8, while the eyes change from the eye-open (open) state to the eye-closed (close) state, the head pose does not jump in the pitch angle direction. The system determines that the scenario is the scenario of normally closing eyes, and the eye status is maintained to be the original eye-closed state, to obtain a corrected eye status.

Step 508: If the head pose corresponding to the second image frame jumps in the pitch angle direction, determine whether the eye status corresponding to the first image frame is the eye-closed state.

If the head pose corresponding to the second image frame jumps in the pitch angle direction, the system determines whether the eye status corresponding to the first image frame is the eye-closed state. If the eye status corresponding to the first image frame is the eye-open state, step 509 is performed. If the eye status corresponding to the first image frame is the eye-closed state, step 510 is performed.

Step 509: If the eye status corresponding to the first image frame is the eye-open state, output that the second eye status corresponding to the second image frame is the eye-open state.

If the eye status corresponding to the first image frame is the eye-open state, it is determined that the scenario is the scenario of lowering the head, opening the eyes, and looking downward, and it is output that the second eye status corresponding to the second image frame is the eye-open state.

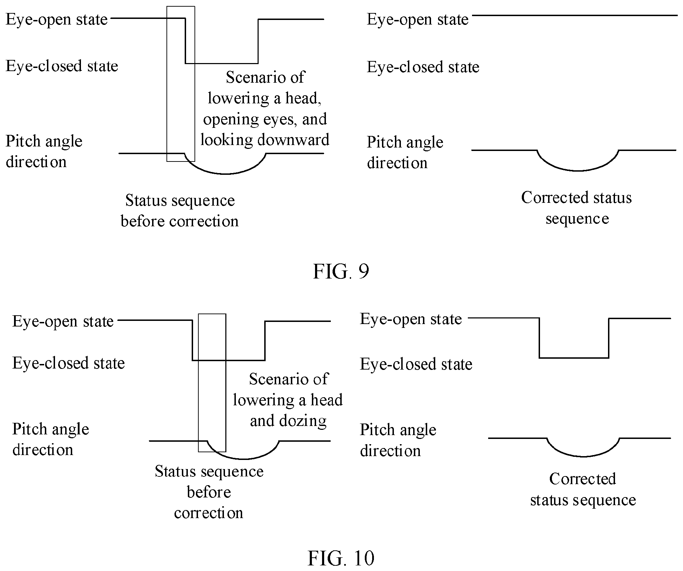

In a schematic example, as shown in FIG. 9, while the eyes change from the eye-open (open) state to the eye-closed (close) state, the head pose jumps in the pitch angle direction. The system determines that the scenario is the scenario of lowering the head, opening the eyes, and looking downward, and the eye status is corrected to the eye-open (open) state, to obtain the corrected eye status.

Step 510: If the eye status corresponding to the first image frame is the eye-closed state, output that the second eye status corresponding to the second image frame is the eye-closed state.

If the eye status corresponding to the first image frame is the eye-closed state, it is determined that the scenario is the scenario of lowering the head and dozing, and it is output that the second eye status corresponding to the second image frame is the eye-closed state.

In a schematic example, as shown in FIG. 10, while the eyes change from the eye-open (open) state to the eye-closed (close) state, the head pose jumps in the pitch angle direction. The system determines that the scenario is the scenario of lowering the head and dozing, and the eye status is maintained to be the original eye-closed (close) state, to obtain the corrected eye status.

Optionally, when the first eye status corresponding to the second image frame is the eye-closed state, the system may distinguish, based on the eye status sequence and the head pose sequence, three scenarios: the scenario of normally closing eyes, the scenario of lowering the head and looking downward, and the scenario of lowering the head and dozing. When only the eye status sequence is used as an input parameter of the fatigue status, a false alarm may occur in these three states, which affects effectiveness of an alarm system. Ahead pose detection module is added, so that two scenarios: the scenario of normally closing eyes and the scenario of lowering the head and opening the eyes may be easily distinguished. If whether the head pose jumps is checked while the eye-closed state is detected: if the head pose does not jump, it is determined that the scenario is the scenario of normally closing eyes, a result is not corrected, and the original eye status is maintained; and if the head pose jumps, it is determined that the scenario is the scenario of lowering the head and looking downward, and the original eye-closed state is corrected to the eye-open state. However, in this case, a head-down dozing event is mistakenly determined as a case of lowering the head and opening the eyes. Consequently, the eye status is mistakenly corrected. To resolve a case in which the head-down dozing event is mistakenly corrected to the eye-open state, a stable state queue of the eyes is added. Two scenarios, that is, the scenario of lowering the head, opening the eyes, and looking downward and the scenario of lowering the head and dozing, are distinguished by checking an eye status of historical continuous frames, that is, the eye status corresponding to the first image frame. If the eye status corresponding to the first image frame is the eye-closed state, it is determined that the scenario is the scenario of lowering the head and dozing, the result is not corrected, and the original eye-closed state is maintained. If the eye status corresponding to the first image frame is the eye-open state, it is determined that the scenario is the scenario of lowering the head, opening the eyes, and looking downward, and the original eye-closed state is corrected to the eye-open state.

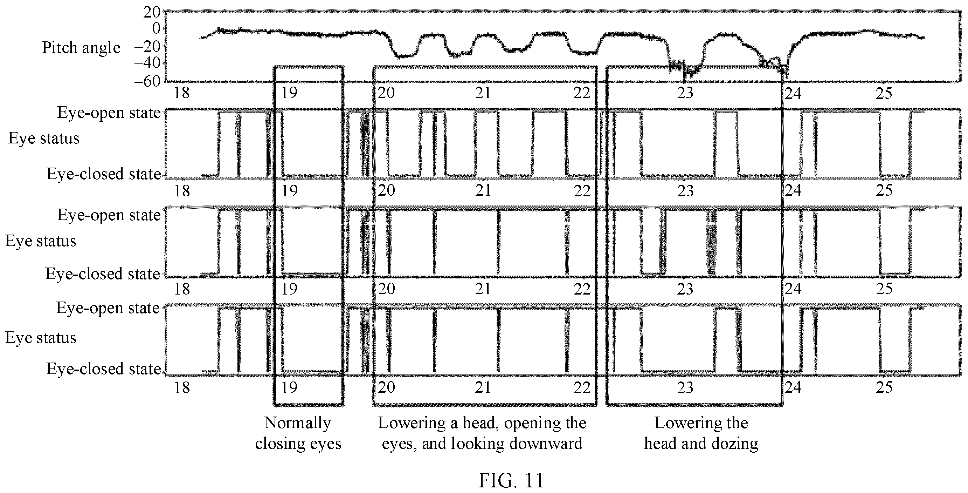

In a schematic example, a process of distinguishing the three scenarios and a correction process are shown in FIG. 11. In FIG. 11, a first row represents the head pose sequence of the head pose in the pitch angle direction, and a second row represents an eye status sequence that corresponds to the head pose and on which no post-processing is performed. A third row represents a corrected eye status sequence obtained after the head pose detection module is added. It can be seen from FIG. 11 that an eye status in the scenario of lowering the head and dozing is mistakenly corrected to the eye-open state. A fourth row represents an accurate eye status obtained after the stable state queue of the eyes are further added to further correct the eye status.

In conclusion, in the method for detecting a status of a driver provided in this embodiment of this application, three scenarios that have almost no difference when being analyzed on images may be accurately distinguished: the scenario of normally closing eyes, a scenario of glancing down, and a scenario of dozing. In addition, misdetection of eye closing caused by glancing downward is accurately restored to the eye-open state by using the stable state queue, and the eye-closed state in the scenario of dozing is not mistakenly modified. In addition, distinguishing different scenarios based on the head pose sequence and the eye status sequence has higher fault tolerance, and significantly improves accuracy of eye status identification in a driving scenario.

An apparatus embodiment of this application is provided below, and may be configured to perform the method embodiments of this application. For details not disclosed in the apparatus embodiments of this application, refer to the method embodiments of this application.

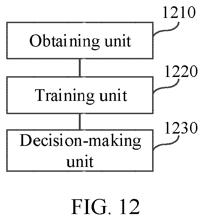

FIG. 12 is a block diagram of an apparatus for detecting a status of a driver according to an example embodiment of this application. The apparatus may be implemented, by using software, hardware, or a combination of software and hardware, as an entirety or a part of the DMS provided in FIG. 2 or the apparatus for detecting a status of a driver provided in FIG. 3. The apparatus may include: a first obtaining unit 1210, a second obtaining unit 1220, and a determining unit 1230.

The first obtaining unit 1210 is configured to obtain a first image frame and a second image frame, where both the first image frame and the second image frame are image frames including the face of a driver, and the first image frame is an image frame captured before the second image frame.

The second obtaining unit 1220 is configured to obtain first detection information of the first image frame and second detection information of the second image frame, where both the first detection information and the second detection information indicate an eye status and a head pose of the driver.

The determining unit 1230 is configured to: when the second detection information indicates that a first eye status corresponding to the second image frame is an eye-closed state, determine, based on the first detection information and the second detection information, a second eye status corresponding to the second image frame.

In a possible implementation, the determining unit 1230 is further configured to:
when the first detection information and the second detection information meet a first preset condition, determine that the second eye status corresponding to the second image frame is an eye-open state.

The first preset condition is that the second detection information indicates that a head pose corresponding to the second image frame jumps in a pitch angle direction, and the first detection information indicates that an eye status corresponding to the first image frame is the eye-open state.

In another possible implementation, the determining unit 1230 is further configured to:
when the first detection information and the second detection information meet a second preset condition, determine that the second eye status corresponding to the second image frame is the eye-closed state.

The second preset condition is that the second detection information indicates that the head pose corresponding to the second image frame jumps in the pitch angle direction, and the first detection information indicates that the eye status corresponding to the first image frame is the eye-closed state.

In another possible implementation, the determining unit 1230 is further configured to:
when the second detection information indicates that the head pose corresponding to the second image frame does not jump in the pitch angle direction, determine that the second eye status corresponding to the second image frame is the eye-closed state.

In another possible implementation, the apparatus further includes a detection unit.

The detection unit is configured to determine a fatigue status detection result based on the head pose and the second eye status that correspond to the second image frame.

In another possible implementation, the apparatus further includes an alarm unit.

The alarm unit is configured to output alarm information when a fatigue status detection result meets a preset alarm condition.

It should be noted that when the apparatus provided in the foregoing embodiment implements functions of the apparatus, division of the foregoing functional modules is only used as an example for description. In actual application, the foregoing functions may be allocated to different functional modules for implementation as required, that is, an internal structure of a device is divided into different functional modules, to implement all or some of the functions described above. In addition, the apparatus provided in the foregoing embodiment and the method embodiments belong to a same concept. For a specific implementation process of the apparatus, refer to the method embodiments. Details are not described herein again.

An embodiment of this application provides an apparatus for detecting a status of a driver. The apparatus for detecting a status of a driver includes a processor, and a memory configured to store processor-executable instructions. When the processor is configured to execute the instructions, the method performed by the DMS in the foregoing embodiments is implemented.

An embodiment of this application provides a computer program product, including computer-readable code or a non-volatile computer-readable storage medium carrying the computer-readable code. When the computer-readable code is run in a processor, the processor performs the method performed by the DMS in the foregoing embodiments.

An embodiment of this application provides a non-volatile computer-readable storage medium. The non-volatile computer-readable storage medium stores computer program instructions. When the computer program instructions are executed by a processor, the method performed by the DMS in the foregoing embodiments is implemented.

The computer-readable storage medium may be a tangible device that may retain and store instructions for use by an instruction execution device. The computer-readable storage medium may be, for example, but is not limited to an electrical storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (random access memory, RAM), a read-only memory (read-only memory, ROM), an erasable programmable read-only memory (erasable programmable read-only memory, EPROM, or flash memory), a static random-access memory (static random-access memory, SRAM), a portable compact disc read-only memory (compact disc read-only memory, CD-ROM), a digital video disc (digital video disc, DVD), a memory stick, a floppy disk, a mechanical coding device, for example, a punched card or a groove protrusion structure that stores instructions, and any suitable combination thereof.

The computer-readable program instructions or code described herein may be downloaded from the computer-readable storage medium to each computing/processing device or to an external computer or external storage device via a network such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or a network interface in each computing/processing device receives the computer-readable program instructions from the network, and forwards the computer-readable program instructions for storage in the computer-readable storage medium in each computing/processing device.

The computer program instructions used to perform operations in this application may be assembly instructions, instruction set architecture (instruction set architecture, ISA) instructions, machine instructions, machine-related instructions, microcode, firmware instructions, status setting data, or source code or target code written in one or any combination of more programming languages. The programming languages include an object-oriented programming language such as Smalltalk and C++, and a conventional procedural programming language such as a "C" language or a similar programming language. The computer-readable program instructions may be completely executed on a user computer, partially executed on the user computer, executed as an independent software package, partially executed on the user computer and partially executed on a remote computer, or completely executed on the remote computer or a server. In a case including the remote computer, the remote computer may be connected to the user computer through any type of network, including the local area network (local area network, LAN) or the wide area network (wide area network, WAN), or may be connected to an external computer (for example, connected over the Internet by using an Internet service provider). In some embodiments, an electronic circuit, for example, a programmable logic circuit, a field-programmable gate array (field-programmable gate array, FPGA) or a programmable logic array (programmable logic array, PLA), is customized by using status information of the computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block in flowcharts and/or block diagrams and a combination of blocks in the flowcharts and/or block diagrams may both be implemented by the computer-readable program instructions.

These computer-readable program instructions may be provided to a processor of a general-purpose computer, a dedicated computer, or another programmable data processing apparatus to produce a machine, so that these instructions, when executed by the processor of the computer or the another programmable data processing apparatus, create an apparatus for implementing functions/actions specified in one or more blocks in the flowcharts and/or block diagrams. These computer-readable program instructions may alternatively be stored in the computer-readable storage medium. These instructions enable the computer, the programmable data processing apparatus, and/or another device to work in a specific manner. Therefore, the computer-readable medium storing the instructions includes an artifact that includes instructions for implementing various aspects of the functions/actions specified in the one or more blocks in the flowcharts and/or block diagrams.

The computer-readable program instructions may alternatively be loaded onto the computer, the another programmable data processing apparatus, or the another device, so that a series of operation steps are performed on the computer, the another programmable data processing apparatus, or the another device to produce a computer-implemented process. Therefore, the instructions executed on the computer, the another programmable data processing apparatus, or the another device implement the functions/actions specified in the one or more blocks in the flowcharts and/or block diagrams.

The flowcharts and block diagrams in the accompanying drawings show a system architecture, a function, and an operation of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, functions marked in the blocks may also occur in a sequence different from that marked in the accompanying drawings. For example, actually, two continuous blocks may be executed substantially in parallel, or may sometimes be executed in a reverse order, depending on a function involved.

It should also be noted that each block in the block diagrams and/or flowcharts, and a combination of blocks in the block diagrams and/or flowcharts may be implemented by hardware (for example, a circuit or an ASIC (application-specific integrated circuit, application-specific integrated circuit)) that performs a corresponding function or action, or may be implemented by a combination of hardware and software, for example, firmware.

Although this application is described herein with reference to embodiments, in a process of implementing this application that claims protection, a person skilled in the art may understand and implement other variations of the disclosed embodiments by viewing the accompanying drawings, the disclosed content, and the appended claims. In the claims, the word "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce good effect.

The foregoing has described embodiments of this application. The foregoing descriptions are examples, are not exhaustive, and are not limited to the disclosed embodiments. Many modifications and variations are apparent to a person of ordinary skill in the art without departing from the scope of the described embodiments, provided that these fall within the scope of the appended claims. Selection of terms used in this specification is intended to best explain the principles of embodiments, actual application, or improvements to technologies in the market, or to enable another person of ordinary skill in the art to understand embodiments disclosed in this specification.

**Claims**

1. A computer-implemented method for detecting a status of a driver, wherein the method comprises:

obtaining (401) a first image frame and a second image frame, wherein both the first image frame and the second image frame are image frames comprising the face of a driver, and the first image frame is an image frame captured before the second image frame;

obtaining (402) first detection information of the first image frame and second detection information of the second image frame, wherein both the first detection information and the second detection information indicate an eye status and a head pose of the driver; and

when the second detection information indicates that a first eye status corresponding to the second image frame is an eye-closed state, determining (403), based on the first detection information and the second detection information, a second eye status corresponding to the second image frame,

wherein the determining, based on the first detection information and the second detection information, a second eye status corresponding to the second image frame comprises:

when the first detection information and the second detection information meet a first preset condition, determining that the second eye status corresponding to the second image frame is an eye-open state, wherein the first preset condition is that the second detection information indicates that a head pose corresponding to the second image frame jumps in a pitch angle direction, and the first detection information indicates that an eye status corresponding to the first image frame is the eye-open state.

2. The method according to claim 1, wherein the determining, based on the first detection information and the second detection information, a second eye status corresponding to the second image frame comprises:

when the first detection information and the second detection information meet a second preset condition, determining that the second eye status corresponding to the second image frame is the eye-closed state, wherein the second preset condition is that the second detection information indicates that the head pose corresponding to the second image frame jumps in the pitch angle direction, and the first detection information indicates that the eye status corresponding to the first image frame is the eye-closed state.

3. The method according to any one of claims 1 to 2, wherein the method further comprises:
when the second detection information indicates that the head pose corresponding to the second image frame does not jump in the pitch angle direction, determining that the second eye status corresponding to the second image frame is the eye-closed state.

4. The method according to any one of claims 1 to 3, wherein the method further comprises:
determining a fatigue status detection result based on the head pose and the second eye status that correspond to the second image frame.

5. The method according to claim 4, wherein the method further comprises:
outputting alarm information when the fatigue status detection result meets a preset alarm condition.

6. An apparatus for detecting a status of a driver, wherein the apparatus comprises:

a first obtaining unit (1210), configured to obtain (401) a first image frame and a second image frame, wherein both the first image frame and the second image frame are image frames comprising the face of a driver, and the first image frame is an image frame captured before the second image frame;

a second obtaining unit (1220), configured to obtain (402) first detection information of the first image frame and second detection information of the second image frame, wherein both the first detection information and the second detection information indicate an eye status and a head pose of the driver; and

a determining unit (1230), configured to: when the second detection information indicates that a first eye status corresponding to the second image frame is an eye-closed state, determine (403), based on the first detection information and the second detection information, a second eye status corresponding to the second image frame,

wherein the determining unit is further configured to:

when the first detection information and the second detection information meet a first preset condition, determine that the second eye status corresponding to the second image frame is an eye-open state, wherein the first preset condition is that the second detection information indicates that a head pose corresponding to the second image frame jumps in a pitch angle direction, and the first detection information indicates that an eye status corresponding to the first image frame is the eye-open state.

7. The apparatus according to claim 6, wherein the determining unit is further configured to:

when the first detection information and the second detection information meet a second preset condition, determine that the second eye status corresponding to the second image frame is the eye-closed state, wherein
the second preset condition is that the second detection information indicates that the head pose corresponding to the second image frame jumps in the pitch angle direction, and the first detection information indicates that the eye status corresponding to the first image frame is the eye-closed state.

8. The apparatus according to any one of claims 6 or 7, wherein the determining unit is further configured to: when the second detection information indicates that the head pose corresponding to the second image frame does not jump in the pitch angle direction, determine that the second eye status corresponding to the second image frame is the eye-closed state.

9. The apparatus according to any one of claims 6 to 8, wherein the apparatus further comprises a detection module, wherein
the detection module is configured to determine a fatigue status detection result based on the head pose and the second eye status that correspond to the second image frame.

10. The apparatus according to claim 9, wherein the apparatus further comprises an alarm module, wherein
the alarm module is configured to output alarm information when the fatigue status detection result meets a preset alarm condition.

11. A non-volatile computer-readable storage medium, storing computer program instructions, wherein when the computer program instructions are executed by a processor, the method according to any one of claims 1 to 5 is implemented.

**Patentansprüche**

1. Computerimplementiertes Verfahren zur Erkennung eines Status eines Fahrers, wobei das Verfahren Folgendes umfasst:

Erlangen (401) eines ersten Bildeinzelbilds und eines zweiten Bildeinzelbilds, wobei sowohl das erste Bildeinzelbild als auch das zweite Bildeinzelbild Bildeinzelbilder sind, die das Gesicht eines Fahrers umfassen, und das erste Bildeinzelbild ein Bildeinzelbild ist, das vor dem zweiten Bildeinzelbild erfasst wird;

Erlangen (402) erster Erkennungsinformationen des ersten Bildeinzelbilds und zweiter Erkennungsinformationen des zweiten Bildeinzelbilds, wobei sowohl die ersten Erkennungsinformationen als auch die zweiten Erkennungsinformationen einen Augenstatus und eine Kopfhaltung des Fahrers angeben; und
wenn die zweiten Erkennungsinformationen angeben, dass ein erster Augenstatus, der dem zweiten Bildeinzelbild entspricht, ein Zustand geschlossenen Auges ist, Bestimmen (403), basierend auf den ersten Erkennungsinformationen und den zweiten Erkennungsinformationen, eines zweiten Augenstatus, der dem zweiten Bildeinzelbild entspricht,
wobei das Bestimmen, basierend auf den ersten Erkennungsinformationen und den zweiten Erkennungsinformationen, eines zweiten Augenstatus, der dem zweiten Bildeinzelbild entspricht, Folgendes umfasst:

wenn die ersten Erkennungsinformationen und die zweiten Erkennungsinformationen eine erste voreingestellte Bedingung erfüllen, Bestimmen, dass der zweite Augenstatus, der dem zweiten Bildeinzelbild entspricht, ein Zustand geöffneten Auges ist, wobei
die erste voreingestellte Bedingung ist, dass die zweiten Erkennungsinformationen angeben, dass eine Kopfhaltung, die dem zweiten Bildeinzelbild entspricht, in eine Nickwinkelrichtung zuckt, und die ersten Erkennungsinformationen angeben, dass ein Augenstatus, der dem ersten Bildeinzelbild entspricht, der Zustand geöffneten Auges ist.

2. Verfahren nach Anspruch 1, wobei das Bestimmen, basierend auf den ersten Erkennungsinformationen und den zweiten Erkennungsinformationen, eines zweiten Augenstatus, der dem zweiten Bildeinzelbild entspricht, Folgendes umfasst:

wenn die ersten Erkennungsinformationen und die zweiten Erkennungsinformationen eine zweite voreingestellte Bedingung erfüllen, Bestimmen, dass der zweite Augenstatus, der dem zweiten Bildeinzelbild entspricht, der Zustand geschlossenen Auges ist, wobei
die zweite voreingestellte Bedingung ist, dass die zweiten Erkennungsinformationen angeben, dass die Kopfhaltung, die dem zweiten Bildeinzelbild entspricht, in die Nickwinkelrichtung zuckt, und die ersten Erkennungsinformationen angeben, dass der Augenstatus, der dem ersten Bildeinzelbild entspricht, der Zustand geschlossenen Auges ist.

**3.** Verfahren nach einem der Ansprüche 1 bis 2, wobei das Verfahren ferner Folgendes umfasst: wenn die zweiten Erkennungsinformationen angeben, dass die Kopfhaltung, die dem zweiten Bildeinzelbild entspricht, nicht in die Nickwinkelrichtung zuckt, Bestimmen, dass der zweite Augenstatus, der dem zweiten Bildeinzelbild entspricht, der Zustand geschlossenen Auges ist.

**4.** Verfahren nach einem der Ansprüche 1 bis 3, wobei das Verfahren ferner Folgendes umfasst: Bestimmen eines Ermüdungsstatuserkennungsergebnisses basierend auf der Kopfhaltung und dem zweiten Augenstatus, der dem zweiten Bildeinzelbild entspricht.

**5.** Verfahren nach Anspruch 4, wobei das Verfahren ferner Folgendes umfasst: Ausgeben von Alarminformationen, wenn das Ermüdungsstatuserkennungsergebnis eine voreingestellte Alarmbedingung erfüllt.

**6.** Vorrichtung zur Erkennung eines Status eines Fahrers, wobei die Vorrichtung Folgendes umfasst:

eine erste Erlangungseinheit (1210), die dazu konfiguriert ist, ein erstes Bildeinzelbild und ein zweites Bildeinzelbild zu erlangen (401), wobei sowohl das erste Bildeinzelbild als auch das zweite Bildeinzelbild Bildeinzelbilder sind, die das Gesicht eines Fahrers umfassen, und das erste Bildeinzelbild ein Bildeinzelbild ist, das vor dem zweiten Bildeinzelbild erfasst wird;
eine zweite Erlangungseinheit (1220), die dazu konfiguriert ist, erste Erkennungsinformationen des ersten Bildeinzelbilds und zweite Erkennungsinformationen des zweiten Bildeinzelbilds zu erlangen (402), wobei sowohl die ersten Erkennungsinformationen als auch die zweiten Erkennungsinformationen einen Augenstatus und eine Kopfhaltung des Fahrers angeben; und
eine Bestimmungseinheit (1230), die zu Folgendem konfiguriert ist: wenn die zweiten Erkennungsinformationen angeben, dass ein erster Augenstatus, der dem zweiten Bildeinzelbild entspricht, ein Zustand geschlossenen Auges ist, Bestimmen (403), basierend auf den ersten Erkennungsinformationen und den zweiten Erkennungsinformationen, eines zweiten Augenstatus, der dem zweiten Bildeinzelbild entspricht,
wobei die Bestimmungseinheit ferner zu Folgendem konfiguriert ist:

wenn die ersten Erkennungsinformationen und die zweiten Erkennungsinformationen eine erste voreingestellte Bedingung erfüllen, Bestimmen, dass der zweite Augenstatus, der dem zweiten Bildeinzelbild entspricht, ein Zustand geöffneten Auges ist, wobei
die erste voreingestellte Bedingung ist, dass die zweiten Erkennungsinformationen angeben, dass eine Kopfhaltung, die dem zweiten Bildeinzelbild entspricht, in eine Nickwinkelrichtung zuckt, und die ersten Erkennungsinformationen angeben, dass ein Augenstatus, der dem ersten Bildeinzelbild entspricht, der Zustand geöffneten Auges ist.

**7.** Vorrichtung nach Anspruch 6, wobei die Bestimmungseinheit ferner zu Folgendem konfiguriert ist:

wenn die ersten Erkennungsinformationen und die zweiten Erkennungsinformationen eine zweite voreingestellte Bedingung erfüllen, Bestimmen, dass der zweite Augenstatus, der dem zweiten Bildeinzelbild entspricht, der Zustand geschlossenen Auges ist, wobei
die zweite voreingestellte Bedingung ist, dass die zweiten Erkennungsinformationen angeben, dass die Kopfhaltung, die dem zweiten Bildeinzelbild entspricht, in die Nickwinkelrichtung zuckt, und die ersten Erkennungsinformationen angeben, dass der Augenstatus, der dem ersten Bildeinzelbild entspricht, der Zustand geschlossenen Auges ist.

**8.** Vorrichtung nach einem der Ansprüche 6 bis 7, wobei die Bestimmungseinheit ferner zu Folgendem konfiguriert ist: wenn die zweiten Erkennungsinformationen angeben, dass die Kopfhaltung, die dem zweiten Bildeinzelbild entspricht, nicht in die Nickwinkelrichtung zuckt, Bestimmen, dass der zweite Augenstatus, der dem zweiten Bildeinzelbild entspricht, der Zustand geschlossenen Auges ist.

**9.** Vorrichtung nach einem der Ansprüche 6 bis 8, wobei die Vorrichtung ferner ein Erkennungsmodul umfasst, wobei das Erkennungsmodul dazu konfiguriert ist, ein Ermüdungsstatuserkennungsergebnis basierend auf der Kopfhaltung und dem zweiten Augenstatus zu bestimmen, die dem zweiten Bildeinzelbild entsprechen.

**10.** Vorrichtung nach Anspruch 9, wobei die Vorrichtung ferner ein Alarmmodul umfasst, wobei das Alarmmodul dazu konfiguriert ist, Alarminformationen auszugeben, wenn das Ermüdungsstatuserkennungsergebnis eine voreingestellte Alarmbedingung erfüllt.

**11.** Nichtflüchtiges computerlesbares Speichermedium, das Computerprogrammanweisungen speichert, wobei, wenn die Computerprogrammanweisungen durch einen Prozessor ausgeführt werden, das Verfahren nach einem der Ansprüche 1 bis 5 implementiert wird.

**Revendications**

**1.** Procédé mis en œuvre par ordinateur de détection d'un état d'un conducteur, dans lequel le procédé comprend :

l'obtention (401) d'une première trame d'image et d'une seconde trame d'image, dans laquelle la première trame d'image et la seconde trame d'image sont des trames d'images comprenant le visage d'un conducteur, et la première trame d'image est une trame d'image capturée avant la seconde trame d'image ;
l'obtention (402) des premières informations de détection de la première trame d'image et des secondes trame d'image, dans lequel les premières informations de détection et les secondes informations de détection indiquent l'état de l'œil et la position de la tête du conducteur ; et
lorsque les secondes informations de détection indiquent qu'un premier état de l'œil correspondant à la seconde trame d'image est un état d'œil fermé, la détermination (403), sur la base des premières informations de détection et des secondes informations de détection, d'un second état de l'œil correspondant à la seconde trame d'image,
dans lequel la détermination, sur la base des premières informations de détection et des secondes informations de détection, d'un second état de l'œil correspondant à la seconde trame d'image comprend :

lorsque les premières informations de détection et les secondes informations de détection satisfont à une première condition prédéfinie, la détermination que le second état de l'œil correspondant à la seconde trame d'image est un état d'œil ouvert, dans lequel
la première condition prédéfinie est que les secondes informations de détection indiquent qu'une position de la tête correspondant à la seconde trame d'image saute dans une direction d'angle de tangage, et que les premières informations de détection indiquent qu'un état de l'œil correspondant à la première trame d'image est l'état d'œil ouvert.

**2.** Procédé selon la revendication 1, dans lequel la détermination, sur la base des premières informations de détection et des secondes informations de détection, d'un second état de l'œil correspondant à la seconde trame d'image comprend :

lorsque les premières informations de détection et les secondes informations de détection satisfont à une seconde condition prédéfinie, la détermination que le second état de l'œil correspondant à la seconde trame d'image est l'état d'œil fermé, dans lequel
la seconde condition prédéfinie est que les secondes informations de détection indiquent que la position de la tête correspondant à la seconde trame d'image saute dans la direction d'angle de tangage, et les premières informations de détection indiquent que l'état de l'œil correspondant à la première trame d'image est l'état d'œil fermé.

**3.** Procédé selon l'une quelconque des revendications 1 et 2, dans lequel le procédé comprend également :
lorsque les secondes informations de détection indiquent que la position de la tête correspondant à la seconde trame d'image ne subit pas de saut dans la direction d'angle de tangage, la détermination que le second état de l'œil correspondant à la seconde trame d'image est l'état d'œil fermé.

**4.** Procédé selon l'une quelconque des revendications 1 à 3, dans lequel le procédé comprend également :
la détermination d'un résultat de détection d'état de fatigue sur la base de la position de la tête et du second état de l'œil correspondant à la seconde trame d'image.

**5.** Procédé selon la revendication 4, dans lequel le procédé comprend également :
l'émission d'informations d'alarme lorsque le résultat de détection d'état de fatigue correspond à une condition d'alarme prédéfinie.

**6.** Appareil de détection d'un état d'un conducteur, dans lequel l'appareil comprend :

une première unité d'obtention (1210), configurée pour obtenir (401) une première trame d'image et une seconde trame d'image, dans lequel la première trame d'image et la seconde trame d'image sont des trames d'images comprenant le visage d'un conducteur, et la première trame d'image est une trame d'image capturée avant la seconde trame d'image ;
une seconde unité d'obtention (1220), configurée pour obtenir (402) les premières informations de détection de la première trame d'image et les secondes informations de détection de la seconde trame d'image, dans lequel les premières informations de détection et les secondes informations de détection indiquent l'état de l'œil et la position de la tête du conducteur ; et une unité de détermination (1230), configurée pour : lorsque les secondes informations de détection indiquent qu'un premier état de l'œil correspondant à la seconde trame d'image est un état d'œil fermé, déterminer (403), sur la base des premières informations de détection et des secondes informations de détection, d'un second état de l'œil correspondant à la seconde trame d'image,

dans lequel l'unité de détermination est également configurée pour :

lorsque les premières informations de détection et les secondes informations de détection satisfont à une première condition prédéfinie, déterminer que le second état de l'œil correspondant à la seconde trame d'image est un état d'œil ouvert, dans lequel la première condition prédéfinie est que les secondes informations de détection indiquent qu'une position de la tête correspondant à la seconde trame d'image saute dans une direction d'angle de tangage, et que les premières informations de détection indiquent qu'un état de l'œil correspondant à la première trame d'image est l'état d'œil ouvert.

7. Appareil selon la revendication 6, dans lequel l'unité de détermination est également configurée pour : lorsque les premières informations de détection et les secondes informations de détection satisfont à une seconde condition prédéfinie, déterminer que le second état de l'œil correspondant à la seconde trame d'image est l'état d'œil fermé, dans lequel la seconde condition prédéfinie est que les secondes informations de détection indiquent que la position de la tête correspondant à la seconde trame d'image saute dans la direction d'angle de tangage, et les premières informations de détection indiquent que l'état de l'œil correspondant à la première trame d'image est l'état œil fermé.

8. Appareil selon l'une quelconque des revendications 6 ou 7, dans lequel l'unité de détermination est également configurée pour : lorsque les secondes informations de détection indiquent que la position de la tête correspondant à la seconde trame d'image ne subit pas de saut dans la direction d'angle de tangage, déterminer que le second état de l'œil correspondant à la seconde trame d'image est l'état d'œil fermé.

9. Appareil selon l'une quelconque des revendications 6 à 8, dans lequel l'appareil comprend également un module de détection, dans lequel le module de détection est configuré pour déterminer un résultat de détection d'état de fatigue sur la base de la position de la tête et du second état de l'œil correspondant à la seconde trame d'image.

10. Appareil selon la revendication 9, dans lequel l'appareil comprend également un module d'alarme, dans lequel le module d'alarme est configuré pour émettre des informations d'alarme lorsque le résultat de détection d'état de fatigue satisfait à une condition d'alarme prédéfinie.

11. Support de stockage non volatile lisible par ordinateur, stockant des instructions de programme informatique, dans lequel, lorsque les instructions de programme informatique sont exécutées par un processeur, le procédé selon l'une quelconque des revendications 1 à 5 est mis en œuvre.

FIG. 1

Sensor 22

Driver monitoring system 23

Automated driving system 24

Human-machine interface 25

Vehicle 21

Processor 26

FIG. 2

EP 4 432 232 B1

| Fatigue status detection module 350 |
|---|

| Another fatigue dependency detection module 340 | Eye status detection module 320 | Head pose detection module 330 |
|---|---|---|

| Image capturing module 310 |
|---|

FIG. 3

| Obtain a first image frame and a second image frame, where both the first image frame and the second image frame are image frames including the face of a driver, and the first image frame is an image frame captured before the second image frame | 401 |
|---|---|

| Obtain first detection information of the first image frame and second detection information of the second image frame, where both the first detection information and the second detection information indicate an eye status and a head pose of the driver | 402 |
|---|---|

| When the second detection information indicates that a first eye status corresponding to the second image frame is an eye-closed state, determine, based on the first detection information and the second detection information, a second eye status corresponding to the second image frame | 403 |
|---|---|

FIG. 4

21

FIG. 5

44    45

43

46

48    47

FIG. 6

Yaw angle

−    +
0

0    +
−
Roll angle

+
−
0
Pitch angle

FIG. 7

Eye-open state

Eye-closed state

Scenario of
normally
closing eyes

Pitch angle
direction

Status sequence
before correction

Eye-open state

Eye-closed state

Pitch angle
direction

Corrected status
sequence

FIG. 8

Eye-open state

Eye-closed state

Scenario of
lowering a head,
opening eyes, and
looking downward

Pitch angle
direction

Status sequence
before correction

Eye-open state

Eye-closed state

Pitch angle
direction

Corrected status
sequence

FIG. 9

Eye-open state

Eye-closed state

Scenario of
lowering a head
and dozing

Pitch angle
direction

Status sequence
before
correction

Eye-open state

Eye-closed state

Pitch angle
direction

Corrected
status sequence

FIG. 10

FIG. 11

1210

Obtaining unit

1220

Training unit

1230

Decision-making
unit

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112052770 A
- CN 110826521 A
- CN 108875642 A